(19) Europäisches Patentamt
European Patent Office
Office européen des brevets

(11) **EP 1 647 916 B1**

(12) **EUROPEAN PATENT SPECIFICATION**

(45) Date of publication and mention
of the grant of the patent:
**27.08.2008 Bulletin 2008/35**

(51) Int Cl.:
***G06K 7/00*** (2006.01)

(21) Application number: **05077835.6**

(22) Date of filing: **21.06.1999**

(54) **Electronic identification system and method with source authenticity**

Elektronisches Identifizierungssystem und -verfahren mit Ursprungsechtheit

Système et méthode d'identification électronique à authenticité de la source

(84) Designated Contracting States:
**AT BE CH DE ES FR GB IT LI NL**

(43) Date of publication of application:
**19.04.2006 Bulletin 2006/16**

(62) Document number(s) of the earlier application(s) in
accordance with Art. 76 EPC:
**99304836.2 / 1 063 610**

(73) Proprietor: **ZIH Corp.**
**Hamilton HM 08 (BM)**

(72) Inventors:
• **Turner, Christopher Gordon Gervase**
**Aylesbury**
**Buckinghamshire HP18 9QN (GB)**
• **Kruger, Johan Dawid**
**Witkoppen 2068**
**Gauteng (ZA)**

(74) Representative: **Robson, Aidan John**
**Reddie & Grose**
**16 Theobalds Road**
**London**
**WC1X 8PL (GB)**

(56) References cited:
**US-A- 4 783 798**       **US-A- 5 629 981**
**US-A- 5 640 002**

EP 1 647 916 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## INTRODUCTION AND BACKGROUND

THIS invention relates to electronic identification systems and more particularly to such systems including radio frequency (RF) transponders and associated readers, interrogators and verifiers therefor.

A system of the aforementioned kind is typically used to mark and identify products or goods, and would further include a plurality of encoder units for writing data into respective memory arrangements of the transponders. In use, a transponder is attached to a product item and the data written into the transponder may relate to the kind of product, the date of manufacture and/or any other data relating to the product. Normally the data is written into the memory arrangement at the source of the product, but in some applications additional data may be written into the memory arrangement at various points along a distribution chain. Of course the data written into the memory arrangement can at any stage be read with a verifier, interrogator or reader.

In some applications, security arrangements are required which would prevent unauthorized parties from attaching non-genuine transponders (purporting to store data encoded by an authorised encoder) to grey or infringing goods, thereby facilitating passing the grey goods off as genuine goods.

US patent no. 4783798 describes an encrypting transponder which provides status security for transmissions between a terminal and a remote computer, network or terminal. Positive user and terminal identification is performed and furthermore, secure message authentication is provided during the course of data transmission.

## OBJECT OF THE INVENTION

A preferred embodiment of the present invention provides a system and method with which transponders originating from an authorized source can be distinguished from non-genuine transponders.

## SUMMARY OF THE INVENTION

The invention is set out in claims 1 and 15.

## BRIEF DESCRIPTION OF THE ACCOMPANYING DIAGRAMS

The invention will now further be described, by way of example only, with reference to the accompanying diagrams wherein:

figure 1    is a basic block diagram of a system embodying the invention;

figure 2    is a block diagram showing an encoder, a transponder and a verifier forming part of the system in more detail; and

figure 3    is a basic flow diagram of a decoding process forming part of the method embodying the invention.

## DESCRIPTION OF A PREFERRED EMBODIMENT OF THE INVENTION

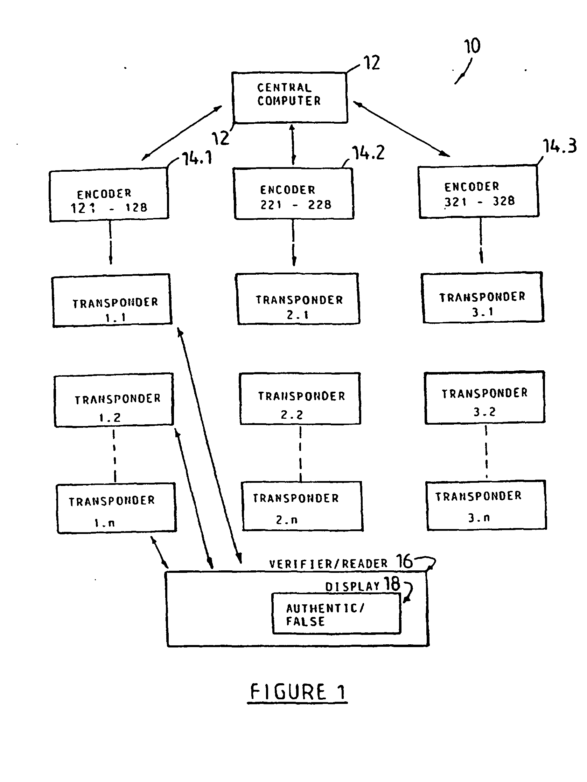

An electronic identification system embodying the invention is generally designated by the reference numeral 10 in figure 1.

The system 10 includes a central computer system 12 which manages and controls the rest of the system. The system 10 further includes a plurality of transponder encoders 14.1 to 14.3 adapted to be brought into communication with the central computer to be programmed thereby. In use, each encoder is preferably located at a source (not shown) or manufacturing plant of products to which transponders are to be secured, to program such transponders by writing data into the transponders. Each encoder has at least one, preferably eight plain-text identification (PTID) numbers or codes characteristic thereof. For example, the PTID'S associated with encoder 14.1 are numbers 121 to 128. These numbers are generated and issued by the central computer and stored in memory arrangements of each of the central computer 12, the relevant encoder and verifiers, which will be referred to hereinafter. Also stored in the central computer for downloading into the encoders and the verifiers respectively, are algorithms for encrypting data to be written into the transponders by the encoders and for decrypting the data by verifiers or readers, as will hereinafter be described. The PTID's and algorithms may from time to time be changed by the central computer 12 by downloading new numbers and algorithms, to maintain and improve the integrity and security of the system.

The system further includes a plurality of radio frequency (RF) transponders. Transponders 1.1 to 1.n are associated with encoder 14.1, transponders 2.1 to 2.n with encoder 14.2 and transponders 3.1 to 3.n with encoder 14.3.

The system still further includes a plurality of verifiers or readers (only one of which is shown at 16 in figure 1).

The verifier includes display means 18 for displaying the outcome of an authenticity verification procedure performed in use by the verifier 16 on any of the transponders, in respect of the authenticity of an encoder used to program that transponder.

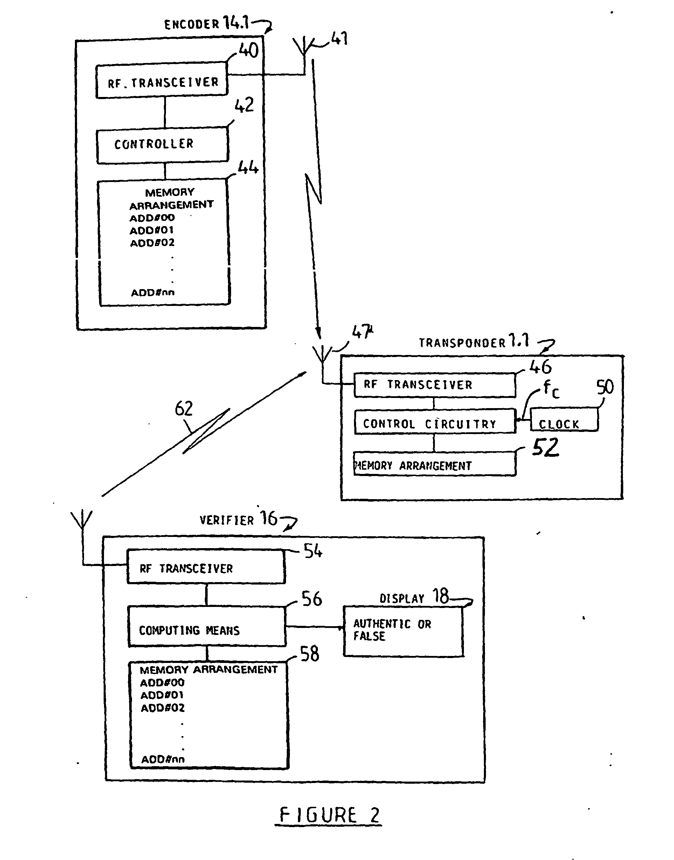

The encoders 14.1 to 14.3 are similar and therefore only encoder 14.1 will be described in more detail herebelow with reference to figure 2. Encoder 14.1 includes an RF transceiver 40, a controller 42 and a memory arrangement 44. Memory arrangement 44 includes a plurality of storage locations each addressable by the controller by a unique address ADD#00 to ADD#nn. The aforementioned PTID codes of the encoder 14.1, once downloaded by the central computer 12, are stored in respective ones of these locations. The aforementioned encryption algorithms or data relating thereto are also stored in respective ones of these locations and are directly or indirectly retrievable by the controller 42 by the respective addresses.

The transponders are also similar and therefore only transponder 1.1 will be described in more detail. Transponder 1.1 includes an RF transceiver 46, control circuitry 48, a clock 50 having a clock frequency $f_c$ and a memory arrangement 52.

Verifier 16 may form part of a reader (not shown) for the transponders, or may be a separate unit. The verifier 16 includes an RF transceiver 54, computing means 56, display 18 and a memory arrangement 58. The memory arrangement 58 includes a plurality of storage locations each addressable by the computing means 56 by a unique address ADD#00 to ADD#nn. The aforementioned PTID codes of the encoders are received from the central computer and stored in respective ones of these locations. The aforementioned encryption/decryption algorithms are similarly received from the central computer and stored in respective locations, or data relating to the algorithms may be stored in these locations. The algorithms are directly or indirectly retrievable by the computing means 56 by their respective addresses. -

In use and as is well known in the art, a selected transponder 1.1 is brought into range of a programmed encoder 14.1. Data including data relating to the product to which the transponder is to be applied is transmitted via an RF link including transceiver 40, antenna 41, antenna 47 and transceiver 46 to the transponder. The transponder receives that data and stores the data in memory arrangement 52 forming part of the transponder. Along the distribution chain of the product, further data may similarly be written into the memory arrangement 52.

As is also well known in the art, the data may at any stage be read by a reader or verifier 16 in known manner. The verifier 16 transmits an RF energizing signal 62 to the transponder 1.1 and a virtual battery forming part of the transponder circuitry 54 is charged. The transponder responds by backscatter modulating on the energizing signal serving as carrier, a data stream including the data stored in the memory arrangement 52 and timed by the frequency $f_c$ of the clock 50. The verifier 16 in turn receives this data and may be adapted in known manner to switch the transponder just read to a sleep or the like mode, which causes the transponder to stop modulating the energizing signal.

It will be appreciated that with such a conventional system an unauthorized distributor of pirate, grey or otherwise infringing goods may simply attach a non-genuine transponder (carrying data similar to the data carried by transponders attached to genuine goods) to the grey goods. Unless sophisticated security mechanisms and methods are employed, such grey goods will not easily be identified or traced.

According to the invention, encrypted data relating to a selected one of the PTID numbers of the source encoder 14.1 is written into and stored as part of the data stored in the memory arrangement 52 of the transponder. To achieve this, the encoder controller is adapted randomly to select any one of the eight PTID numbers. This PTID number and a selected one of the encryption algorithms are utilized by encryption means forming part of the controller in a first encryption process, to yield encrypted data relating to the PTID number. At least some of the variables to be used with the encryption algorithm are functions of measurable physical characteristics of the transponder 1.1, such as the frequency $f_c$ of the transponder clock 50. The clock frequency $f_c$ is determined from a response signal from the transponder during the programming process.

The verifier 16 in turn is adapted (as will hereinafter be described) to retrieve the relevant decryption algorithm from its memory arrangement 58, to determine the relevant physical properties of the transponder concerned and to decipher the encrypted data into a plain-text number. If the deciphered plain-text number is equal to an authorized PTID number stored in the memory arrangement 58 of the verifier 16, an "AUTHENTIC" message is displayed on display 18. If the result of the deciphering process does not correspond to an authorized PTID, a "FALSE" message is displayed.

The encryption algorithm may be of the general form:

$$PTID = a.f(x) + b.f(y) + c.f(z) + rem \qquad\qquad — \quad A$$

wherein

PTID        is the selected PTID number of the encoder;
a, b and c    are scaling constants;
x, y, z        are independent variables, preferably relating to physical characteristics of the transponder being programmed; and
rem        is a remainder.

The encrypted data relating to the PTID of the encoder 14.1 and which is subsequently stored in the transponder 1.1, is preferably the remainder (rem) part only, of the above encryption process. The rem-data may be four bits in length.

As stated hereinbefore, a randomly selected first algorithm of a first set of encryption algorithms stored in the encoder 14.1 and correspondingly stored in the verifier 16 may be used to encrypt the PTID number of the encoder which is, as stated hereinbefore, randomly selected by the encoder from the available PTID numbers therefor. Data relating to the address where the selected first algorithm is stored and a second algorithm are used in a second encryption process, to yield encrypted data relating to the address of the selected first algorithm. The second algorithm is of the following general form:

$$AAD = d.f(m) + e.f(n) + g.f(o) + REM \qquad \text{—— B}$$

wherein

AAD        is the address of the selected first algorithm;
d, e and g    are scaling constants;
m,n and o    are independent variables; and
REM        is a remainder.

The encrypted data relating to the address of the first encryption algorithm and which is to be stored in the transponder 1.1, is preferably the remainder (REM) part only of the aforementioned second encryption process. The REM-data may be four bits in length.

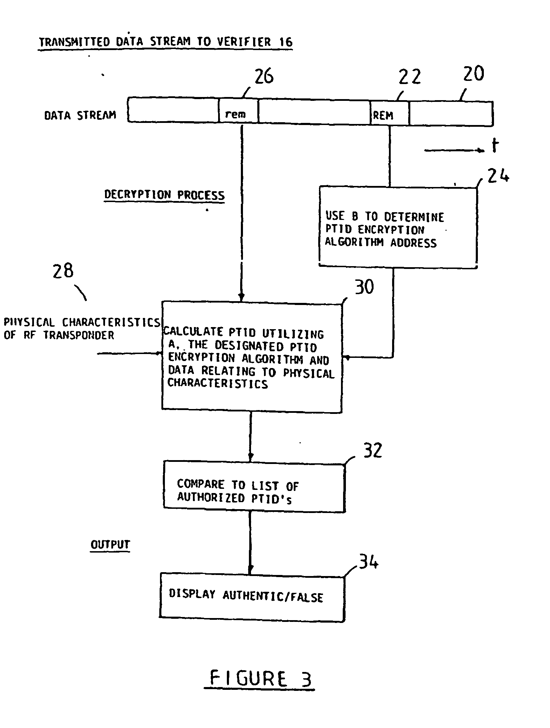

The data stored in the memory arrangement 52 of transponder 1.1 and which is backscatter modulated in the form of a data stream on the energizing signal 62 during a reading or verification process of the transponder, is diagrammatically illustrated in figure 3.

The data stream is designated 20 in figure 3. The REM-data 22 is utilized together with equation B as shown at 24, to calculate the address of the first encryption algorithm used by the encoder 14.1 to provide encrypted data relating to the randomly selected PTI number of the encoder. This address is utilized by the computing means 56 to retrieve the first algorithm from the memory arrangement 58 forming part of the verifier.

The aforementioned first algorithm, the rem-data 26 in the data stream 20 and input data 28 relating to physical characteristics (in this sample the frequency $f_c$ of the clock 50) of the transponder are utilized by the verifier 16 to calculate a plain-text output number at 30.

The plain-text output number is fed at 32 to a comparator of the computing means 56, to compare the number to a list of authorized PTID numbers stored in the memory arrangement 58 of the verifier. If the output number corresponds to one of the authorized PTID numbers, the verifier displays on display 18 the message "AUTHENTIC". This would indicate that the transponder 1.1 has been programmed with an authorized encoder 14.1 at the source of the product. If the output number does not so correspond, it would mean that the transponder 1.1 includes fake data and has not been programmed at an authorized source of the particular product. A "FALSE" message would then be displayed on display 18.

It will be appreciated that there are many variations in detail on the method and system according to the invention without departing from the scope of the invention defined by the appended claims.

**Claims**

1.   A method of storing data into a transponder (1.1), the method including the steps of: electronically measuring a physical characteristic of the transponder and producing data relating thereto **characterised by**;

    utilizing the produced data in an encryption algorithm, at least one variable of which is a function of the physical characteristic of the transponder, to encrypt data to be written into the transponder; and
    writing the encrypted data into a memory arrangement (52) of the transponder.

**2.** A method as claimed in claim 1 **characterised in that** the physical characteristic is a clock frequency of circuitry of the transponder, and wherein the clock frequency is measured by receiving a response signal from the transponder and utilizing the received signal to measure the clock frequency.

**3.** A method as claimed in claim 1 or claim 2 **characterised in that** the encrypted data is written into the memory arrangement (52) of the transponder by means of a transponder encoder, said encoder including means for providing an identification code characteristic of an entity externally of the transponder, to form part of the data to be written into the transponder.

**4.** A method as claimed in claim 3 **characterised in that** the identification code is selected from a plurality of identity codes characteristic of the encoder and which are stored in a memory arrangement of the encoder; the identification code being randomly selected from one of said plurality of identification codes.

**5.** A method as claimed in claim 4 **characterised in that** the plurality of identification codes is generated from a central computer, the identification codes being downloaded into the memory arrangement of the encoder and into a memory arrangement of at least one verifier, to constitute corresponding authorized codes.

**6.** A method as claimed in any one of claims 3 and 5 **characterised in that** the encoder includes encryption means for utilizing said encryption algorithm and the selected identification code in a first encryption process to provide encrypted data relating to the identification code, to form part of the data to be written into the transponder.

**7.** A method as claimed in claim 6 **characterised in that** the controller of the encoder is programmed randomly to select the first encryption algorithm from a first set of encryption algorithms pre-stored in the memory arrangement of the encoder.

**8.** A method as claimed in claim 7 **characterised in that** each algorithm includes a function of at least one physical characteristic of the transponder into which the data is to be written.

**9.** A method as claimed in claim 8 **characterised in that** the algorithm is of a general form wherein the identification code is equal to at least one function of the physical characteristic of the transponder plus a first remainder.

**10.** A method as claimed in claim 9 **characterised in that** the data relating to the identification code and which forms part of the data to be written into the transponder includes the aforementioned remainder.

**11.** A method as claimed in claim 10 **characterised in that** data relating to an algorithm address of the selected algorithm is also included in the data to be written into the memory arrangement of the transponder.

**12.** A method as claimed in claim 11 **characterised in that** the controller of the encoder utilizes a second algorithm and said data relating to the address in a second encryption process, to yield encrypted data relating to the algorithm address, to be written into the transponder.

**13.** A method as claimed in claim 12 **characterised in that** the second algorithm is of a general form wherein the algorithm address is equal to at least one function of an independent variable plus a second remainder.

**14.** A method as claimed in claim 13 **characterised in that** the encrypted data relating to the algorithm address and which forms part of the data to be written into the transponder includes the aforementioned second remainder.

**15.** A system for storing data into a transponder including:

   - a transponder encoder (14.1) for writing data into a memory arrangement (52) of a transponder (1.1) adapted to receive data from the encoder;
   - the transponder encoder adapted for electronically measuring a physical characteristic of the transponder from a response signal of the transponder and producing data relating thereto;

   whereby the encoder processes the produced data in an encryption algorithm, at least one wariable of which is a function of the physical characteristic of the transponder, to encrypt data to be written into the transponder; and means for writing the encrypted data into the memory arrangement (52) of the transponder.

16. A method according to claim 1 **characterised by**:

including in the data, data relating to an identification code of an entity externally of the transponder;
- reading the data written into the transponder with a verifier (16) ;
- extracting from the data read, the data relating to the identification code;
- comparing the extracted data to data relating to an authorized identification code for the entity; and
- providing an indication whether the extracted data matches the data relating to the authorized identification code.

**Patentansprüche**

1. Verfahren zum Speichern von Daten in einem Transponder (1.1), wobei das Verfahren die Schritte enthält: elektronisches Ausmessen von einer physikalischen Eigenschaft des Transponders und Erzeugen von Daten, welche sich darauf beziehen, **gekennzeichnet durch:**

Verwenden der erzeugten Daten in einem Verschlüsselungsalgorithmus, wobei zumindest eine Variable davon eine Funktion der physikalischen Eigenschaft des Transponders ist, um Daten, welche in den Transponder zu schreiben sind, zu verschlüsseln, und
Schreiben der verschlüsselten Daten in eine Speicheranordnung (52) des Transponders.

2. Verfahren nach Anspruch 1, **dadurch gekennzeichnet, dass** die physikalische Eigenschaft eine Taktfrequenz der Schaltung des Transponders ist, und wobei die Taktfrequenz gemessen wird, indem ein Antwortsignal von dem Transponder empfangen wird und das empfangene Signal dazu verwendet wird, um die Taktfrequenz zu messen.

3. Verfahren nach Anspruch 1 oder 2, **dadurch gekennzeichnet, dass** die verschlüsselten Daten in die Speicheranordnung (52) des Transponders mittels eines Transponder-Encoders geschrieben werden, wobei der Encoder ein Mittel zum Bereitstellen von einer Identifikationscode-Eigenschaft von einer Einheit extern zum Transponder enthält, um ein Teil der Daten auszubilden, welche in den Transponder zu schreiben sind.

4. Verfahren nach Anspruch 3, **dadurch gekennzeichnet, dass** der Identifikationscode aus einer Mehrzahl von Einheit-Code-Eigenschaften des Encoders ausgewählt ist, welche in einer Speicheranordnung des Encoders gespeichert sind, wobei der Identifikationscode aus einem aus der Mehrzahl von Identifikationscodes zufällig ausgewählt wird.

5. Verfahren nach Anspruch 4, **dadurch gekennzeichnet, dass** die Mehrzahl von Identifikationscodes von einem Zentral-Computer erzeugt wird, wobei die Identifikationscodes in die Speicheranordnung des Encoders und in eine Speicheranordnung von zumindest einem Prüfgerät heruntergeladen werden, um entsprechende Autorisierungscodes zu bilden.

6. Verfahren nach einem der Ansprüche 3 und 5, **dadurch gekennzeichnet, dass** der Encoder ein Verschlüsselungsmittel zum Verwenden des Verschlüsselungsalgorithmus und des ausgewählten Identifikationscodes in einem ersten Verschlüsselungsprozess enthält, um verschlüsselte Daten bezogen auf den Identifikationscode bereitzustellen, um einen Teil der Daten auszubilden, welche in den Transponder zu schreiben sind.

7. Verfahren nach Anspruch 6, **dadurch gekennzeichnet, dass** die Steuerung des Encoders zufällig programmiert wird, um den ersten Verschlüsselungsalgorithmus aus einem ersten Satz von Verschlüsselungsalgorithmen auszuwählen, welche in der Speicheranordnung des Encoders zuvor gespeichert sind.

8. Verfahren nach Anspruch 7, **dadurch gekennzeichnet, dass** jeder Algorithmus eine Funktion von zumindest einer physikalischen Eigenschaft des Transponders enthält, in welchen die Daten zu schreiben sind.

9. Verfahren nach Anspruch 8, **dadurch gekennzeichnet, dass** der Algorithmus von einer allgemeinen Form ist, wobei der Identifikationscode gleich zumindest einer Funktion von der physikalischen Eigenschaft des Transponders zuzüglich eines ersten Rests ist.

10. Verfahren nach Anspruch 9, **dadurch gekennzeichnet, dass** die Daten, welche dem Identifikationscode zugehörig sind, und welche einen Teil der Daten ausbilden, welche in den Transponder zu schreiben sind, den zuvor genannten Rest enthalten.

**11.** Verfahren nach Anspruch 10, **dadurch gekennzeichnet, dass** die Daten, welche einer Algorithmus-Adresse des ausgewählten Algorithmus zugehörig sind, ebenfalls in den Daten enthalten sind, welche in die Speicheranordnung des Transponders zu schreiben sind.

**12.** Verfahren nach Anspruch 11, **dadurch gekennzeichnet, dass** die Steuerung des Encoders einen zweiten Algorithmus und die Daten, welche sich auf die Adresse in einem zweiten Verschlüsselungsprozess beziehen, verwendet, um verschlüsselte Daten zu erzielen, welche sich auf die Algorithmus-Adresse beziehen, welche in den Transponder zu schreiben sind.

**13.** Verfahren nach Anspruch 12, **dadurch gekennzeichnet, dass** der zweite Algorithmus von einer allgemeinen Form ist, wobei die Algorithmus-Adresse gleich zumindest einer Funktion von einer unabhängigen Variablen zuzüglich eines zweiten Rests ist.

**14.** Verfahren nach Anspruch 13, **dadurch gekennzeichnet, dass** die verschlüsselten Daten, welche sich auf die Algorithmus-Adresse beziehen, und welche einen Teil der Daten ausbilden, welche in den Transponder zu schreiben sind, den zuvor genannten zweiten Rest enthalten.

**15.** System zum Speichern von Daten in einen Transponder, welches enthält:

einen Transponder-Encoder (14.1) zum Schreiben von Daten in eine Speicheranordnung (52) eines Transponders (1.1), welcher dazu ausgelegt ist, um Daten von dem Encoder zu empfangen;

wobei der Transponder-Encoder zum elektronischen Ausmessen von einer physikalischen Eigenschaft des Transponders von einem Antwortsignal des Transponders und zum Erzeugen von Daten, welche sich darauf beziehen, ausgelegt ist;
wobei der Encoder die erzeugten Daten in einem Verschlüsselungsalgorithmus verarbeitet, wobei zumindest eine Variable davon eine Funktion von der physikalischen Eigenschaft des Transponders ist, um Daten zu verschlüsseln, welche in den Transponder zu schreiben sind; und
ein Mittel zum Schreiben der verschlüsselten Daten in die Speicheranordnung (52) des Transponders.

**16.** Verfahren nach Anspruch 1, **gekennzeichnet durch:**

Aufnehmen von Daten, welche sich auf einen Identifikationscode von einer Einheit extern zum Transponder beziehen, in die Daten;
Auslesen der Daten, welche in den Transponder geschrieben sind, **durch** ein Prüfgerät (16);
Extrahieren der Daten, welche sich auf den Identifikationscode beziehen, aus den ausgelesenen Daten;
Vergleichen der extrahierten Daten mit Daten, welche sich auf einen autorisierten Identifikationscode für die Einheit beziehen; und
Bereitstellen von einer Anzeige dazu, ob die extrahierten Daten mit den Daten übereinstimmen, welche sich auf den autorisierten Identifikationscode beziehen.

**Revendications**

**1.** Procédé pour stocker des données dans un transpondeur (1.1), le procédé comportant les étapes consistant à : mesurer électroniquement une caractéristique physique du transpondeur et produire des données relatives à cela, **caractérisé par** les étapes consistant à :

utiliser les données produites dans un algorithme de chiffrement, dont au moins une variable est en fonction de la caractéristique physique du transpondeur, pour chiffrer des données destinées à être écrites dans le transpondeur ; et
écrire les données chiffrées dans un agencement de mémoire (52) du transpondeur.

**2.** Procédé selon la revendication 1, **caractérisé en ce que** la caractéristique physique est une fréquence d'horloge de la circuiterie du transpondeur, et dans lequel la fréquence d'horloge est mesurée en recevant un signal de réponse du transpondeur et en utilisant le signal reçu pour mesurer la fréquence d'horloge.

**3.** Procédé selon la revendication 1 ou 2, **caractérisé en ce que** les données chiffrées sont écrites dans un agencement de mémoire (52) du transpondeur au moyen d'un codeur de transpondeur, ledit codeur comportant des moyens pour délivrer une caractéristique de code d'identification d'une entité externe du transpondeur pour former une partie des données destinées à être écrites dans le transpondeur.

4. Procédé selon la revendication 3, **caractérisé en ce que** le code d'identification est sélectionné à partir d'une pluralité de caractéristiques de codes d'identité du codeur et qui sont stockées dans un agencement de mémoire du codeur ; le code d'identification étant sélectionné de manière aléatoire à partir d'un code de ladite pluralité de codes d'identification.

5. Procédé selon la revendication 4, **caractérisé en ce que** la pluralité de codes d'identification est générée à partir d'un ordinateur central, les codes d'identification étant téléchargés dans l'agencement de mémoire du codeur et dans un agencement de mémoire d'au moins un vérificateur, pour constituer des codes autorisés correspondant.

6. Procédé selon l'une quelconque des revendications 3 et 5, **caractérisé en ce que** le codeur comporte des moyens de chiffrement pour utiliser ledit algorithme de chiffrement et le code d'identification sélectionné dans un premier processus de chiffrement pour délivrer des données chiffrées relatives au code d'identification, afin de former une partie des données destinées à être écrites dans le transpondeur.

7. Procédé selon la revendication 6, **caractérisé en ce que** le contrôleur du codeur est programmé de manière aléatoire pour sélectionner le premier algorithme de chiffrement à partir d'un premier ensemble d'algorithmes de chiffrement préalablement stockés dans l'agencement de mémoire du codeur.

8. Procédé selon la revendication 7, **caractérisé en ce que** chaque algorithme comporte une fonction d'au moins une caractéristique physique du transpondeur dans lequel les données sont écrites.

9. Procédé selon la revendication 8, **caractérisé en ce que** l'algorithme est d'une forme générique dans laquelle le code d'identification est égal à au moins une fonction de la caractéristique physique du transpondeur plus un premier reliquat.

10. Procédé selon la revendication 9, **caractérisé en ce que** les données relatives au code d'identification et qui font partie des données destinées à être écrites dans le transpondeur comportent le reliquat susmentionné.

11. Procédé selon la revendication 10, **caractérisé en ce que** des données relatives à une adresse d'algorithme de l'algorithme sélectionné sont également incluses dans les données destinées à être écrites dans l'agencement de mémoire du transpondeur.

12. Procédé selon la revendication 11, **caractérisé en ce que** le contrôleur du codeur utilise un second algorithme et lesdites données relatives à l'adresse dans un second processus de chiffrement, pour générer des données chiffrées relatives à l'adresse d'algorithme, destinées à être écrites dans le transpondeur.

13. Procédé selon la revendication 12, **caractérisé en ce que** le second algorithme est d'une forme générique dans laquelle l'adresse d'algorithme est égale à au moins une fonction d'une variable indépendante plus un second reliquat.

14. Procédé selon la revendication 13, **caractérisé en ce que** les données chiffrées relatives à l'adresse d'algorithme et qui font partie des données destinées à être écrites dans le transpondeur comportent le second reliquat susmentionné.

15. Système pour stocker des données dans un transpondeur, comportant :

    - un codeur de transpondeur (14.1) pour écrire des données dans un agencement de mémoire (52) d'un transpondeur (1.1) apte à recevoir des données provenant du codeur ;
    - le codeur de transpondeur apte à mesurer électroniquement une caractéristique physique du transpondeur à partir d'un signal de réponse du transpondeur et à produire des données relatives à cela ;

moyennant quoi le codeur traite les données produites dans un algorithme de chiffrement, dont au moins une variable est en fonction de la caractéristique physique du transpondeur, pour chiffrer des données destinées à être écrites dans le transpondeur ; et
des moyens pour écrire les données chiffrées dans l'agencement de mémoire (52) du transpondeur.

**16.** Procédé selon la revendication 1, **caractérisé par** les étapes consistant à :

inclure dans les données, des données relatives à un code d'identification d'une entité externe du transpondeur ;
- lire les données écrites dans le transpondeur au moyen d'un vérificateur (16) ;
- extraire, à partir des données lues, les données relatives au code d'identification ;
- comparer les données extraites à des données relatives à un code d'identification autorisé pour l'entité ; et
- délivrer une indication déterminant si les données extraites correspondent aux données relatives au code d'identification autorisé.

FIGURE 1

ENCODER 14.1

RF.TRANSCEIVER 40

41

CONTROLLER 42

MEMORY
ARRANGEMENT
ADD#00
ADD#01
ADD#02
.
.
.
ADD#nn 44

47

TRANSPONDER 1.1

RF TRANSCEIVER 46

$f_c$

CONTROL CIRCUITRY

CLOCK 50

MEMORY ARRANGEMENT 52

62

VERIFIER 16

RF TRANSCEIVER 54

COMPUTING MEANS 56

DISPLAY 18

AUTHENTIC OR
FALSE

MEMORY ARRANGEMENT 58
ADD#00
ADD#01
ADD#02
.
.
.
ADD#nn

FIGURE 2

TRANSMITTED DATA STREAM TO VERIFIER 16

DATA STREAM

| | rem | | REM | |

26    22    20

$\longrightarrow t$

DECRYPTION PROCESS

24

USE B TO DETERMINE
PTID ENCRYPTION
ALGORITHM ADDRESS

28

PHYSICAL CHARACTERISTICS
OF RF TRANSPONDER

30

CALCULATE PTID UTILIZING
A, THE DESIGNATED PTID
ENCRYPTION ALGORITHM AND
DATA RELATING TO PHYSICAL
CHARACTERISTICS

32

COMPARE TO LIST OF
AUTHORIZED PTID's

OUTPUT

34

DISPLAY AUTHENTIC/FALSE

FIGURE 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4783798 A